# EUROPEAN PATENT SPECIFICATION

(11) **EP 1 977 118 B1**
(45) Date of publication and mention of the grant of the patent: **17.07.2013**
(21) Application number: 07705451.8
(22) Date of filing: 22.01.2007
(51) Int. Cl.: F16B 13/00

(54) **ANCHOR FOR FRIABLE MATERIAL**
ANKER FÜR SPRÖDES MATERIAL
ANCRAGE POUR MATERIAU FRIABLE

(30) Priority: 23.01.2006 FR 0650236
(43) Date of publication of application: 08.10.2008
(73) Proprietor: SOCIETE DE PROSPECTION ET D'INVENTIONS TECHNIQUES SPIT, 26501 Bourg-Les-Valence Cédex (FR)
(72) Inventor: BARTHOMEUF, Jean-Paul, F-26300 Alixan (FR); GAUTHIER, Alain, F-07300 Saint-Jean-De-Muzols (FR)
(74) Representative: Bloch, Gérard
(86) International application number: PCT/IB2007/000143
(87) International publication number: WO 2007/083233

(56) References cited:
- EP-A- 0 165 674
- WO-A-94/03734

## Description

The invention relates to an anchor for friable material such as a dry partition wall panel, for example of the kind known by the trade name "Placoplâtre".

More specifically, the invention relates to an anchor for friable material, comprising a body with a piercing end, at the other end a bearing flange with means of collaboration with a screwing tool and an external anchoring screw thread, a bore to accept a fastening being formed in the body or the body comprising a threaded shank portion beyond the flange.

In order to insert such an anchor into a support made of friable material, all that is required is for the anchor to be screwed into the support without the need to pierce a hole in the support beforehand, as is the case with numerous other anchors. Fitting is whereby simplified greatly.

Once the anchor has been anchored in the support, in order to attach something to the support, either a fastening is introduced into the bore in the body of the anchor, if the anchor body is pierced with such a bore, or a nut is screwed onto the threaded shank portion that extends the anchor body beyond its bearing flange, if it has one.

Anchors of one of the above-defined types are disclosed in documents EP-0 165 674, EP-1 443 225 and EP-0 943 822. Such anchors are made of metal or of plastic. In the aforementioned documents, the anchors comprise a hollow body of substantially cylindrical shape. The cylindrical body supports the screw thread. It is desirable to lighten such a structure in order to save on material.

To do this, it might be possible simply to omit the cylindrical body, the screw thread providing the connection between the bearing flange and the piercing end. However, were this to be done, the screw thread would need to be overengineered in order to stiffen it, because otherwise there would be a risk of it twisting under the action of the means used to turn the anchor. However, the effect of overengineering in this way would not ultimately solve the problem of saving material. Another option might be to pierce slots in the cylindrical body, as in document EP-0 943 822. However, the ensuing saving of material would be negligible.

The present invention aims to propose an anchor which is both lightened and operational.

To this end, the invention relates to an anchor for friable material, comprising a piercing end, at the other end, a bearing flange with means of collaboration with a tool for turning the anchor, and an anchoring screw thread, characterized in that it comprises, between the bearing flange and the piercing end, a plurality of struts for transmitting a driving torque, about which struts the screw thread runs.

By virtue of the invention, the struts correctly transmit the torque and there is no need to overengineer the screw thread. Furthermore, the saving on material achieved by replacing a cylindrical body with a plurality of struts is significant. When the anchor is intended to accept a fastening such as a screw, the space formed between the struts also allows the friable material that has entered the volume of the anchor to be removed as the fastening is introduced.

Advantageously, the struts have a cross section the largest dimension of which is more or less parallel to the direction of a driving torque.

Advantageously, in this case, the struts have a more or less rectangular cross section, the largest dimension of the rectangle being parallel to the direction of a turning torque.

As a preference, the anchor comprises a support ring supporting the flange and a support ring supporting the piercing end, and the struts run between the two rings.

In one preferred embodiment, the struts extend along the internal surface of the support ring supporting the flange and form the means of collaboration with a tool for turning the anchor.

According to one embodiment, the struts run in single pieces between the two rings.

As a preference also, the anchor comprises four equidistant straight struts.

Advantageously in this case, the piercing end comprising a piercing blade runs overall in a plane, the anchor comprises two struts in the plane of the blade and two struts equidistant from them.

According to a first particular embodiment, the anchor comprises struts in the form of helixes.

According to a second particular embodiment, the anchor comprises struts forming a latticework.

According to a third particular embodiment, the anchor comprises pairs of struts each pair in the form of a V, running between a support ring and the screw thread or between two successive turns of the screw thread.

The invention applies particularly to an anchor intended to accept a fastening such as a screw. The applicant company does not, however, intend to restrict the scope of its rights to this sole application and the invention relates more generally to an anchor with a bearing flange, a piercing end, and a screw thread between the two. In particular, the invention applies to anchors comprising a threaded shank extending the body of the anchor beyond the flange, intended to take a bolt for attaching something.

The invention will be better understood from reading the following description of the preferred embodiment of the invention, with reference to the attached sheet of drawings, in which :
- Figure 1 depicts a perspective view of the preferred embodiment of the anchor of the invention;
- Figure 2 depicts a profile view of the preferred embodiment of the anchor of the invention;
- Figure 3 depicts a front-on view of the bearing flange of the preferred embodiment of the anchor of the invention;
- Figure 4 depicts a profile view of a first particular embodiment of the anchor of the invention;
- Figure 5 depicts a profile view of a second particular embodiment of the anchor of the invention;
- Figure 6 depicts a development of the rings and of the struts of the anchor of Figure 5, and
- Figure 7 depicts a profile view of a third particular embodiment of the anchor of the invention.

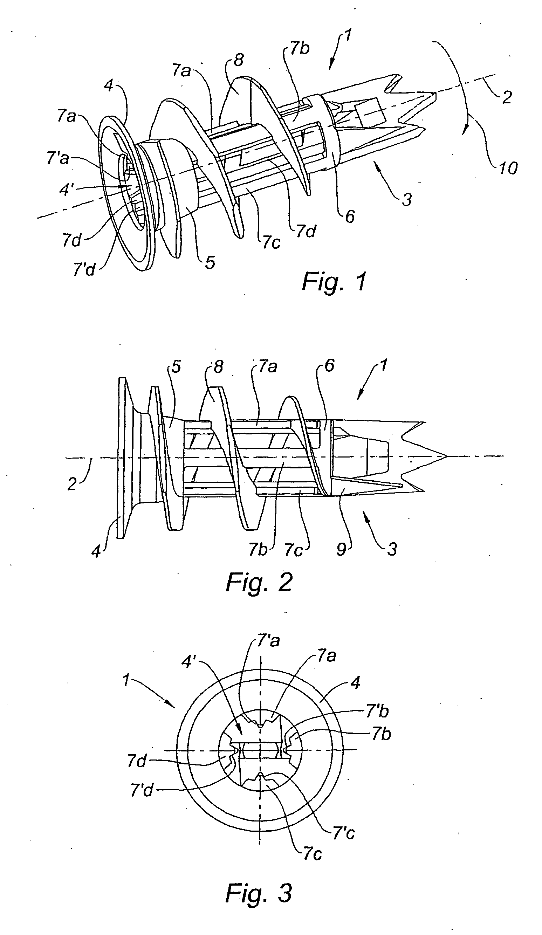

With reference to Figures 1 and 2, the anchor 1, of axis 2, is designed for securing a fastening, such as a screw, in a support made of friable material and comprises a piercing end 3 and a bearing flange 4.

The piercing end 3 more specifically described in documents EP-0 165 674, EP-1 443225 and EP-0 943 822, has the form of a blade 3 provided at its free end in this instance with three pointed piercing teeth. It has the function of piercing and boring a friable material.

The bearing flange 4 is extended, at the same end as the piercing end 3, by a more or less cylindrical ring 5. The piercing end 3 is extended, on the same end as the bearing flange 4, by a ring 6 which is more or less cylindrical. These rings 5, 6 in some way correspond to the ends of the cylindrical body of one of the anchors from the aforementioned documents.

The ring 5 supporting the bearing flange 4 comprises, formed on its interior surface, an imprint 4' forming a means 4' of collaboration with a tool for turning the anchor 1. In this instance, it is an imprint of the Phillips type 4' to accept a cross-head screwdriver.

Between the rings 5, 6 the anchor 1 has four struts 7a, 7b, 7c, 7d for transmitting a driving torque, here a screwing torque. The struts 7a, 7b, 7c, 7d run from the ring 5 supporting the bearing flange 4 to the ring 6 supporting the piercing end 3 and secure the one to the other. They are designed to transmit a screwing torque from the bearing flange 4 to the piercing end 3.

The struts 7a, 7b, 7c, 7d here are of substantially rectangular cross section, the long dimension of the rectangle running tangentially to the rings 5, 6, or in other words at right angles to, without being secant with, the axis 2 of the anchor 1. The struts 7a, 7b, 7c, 7d are thus designed to exhibit a longer dimension and therefore greater strength in the screwing direction (direction of a screwing torque) and can thus transmit the latter from the bearing flange 4 to the piercing end 3.

It is noted that the struts 7a, 7b, 7c, 7d preferably have a rounded rectangular cross section, in this instance each strut 7a, 7b, 7c, 7d forms a longitudinal edge of the wall of a hollow cylinder. In other words, the volume formed by the exterior surfaces of the struts 7a, 7b, 7c, 7d in this instance is a cylinder. As can be seen in Figure 3, the lateral faces of the struts 7a, 7b, 7c, 7d may be chamfered, the struts 7a, 7b, 7c, 7d then have a somewhat rounded trapezoidal cross section. Whatever their shape, the essential thing is for the struts 7a, 7b, 7c, 7d to be strong enough in the screwing direction that they can transmit this torque from the bearing flange 4 to the piercing end 3.

The struts 7a, 7b, 7c, 7d support, on their exterior surface, a screw thread 8 running from the ring 5 supporting the bearing flange 4 to the ring 6 supporting the piercing end 3. The screw thread 8 anchors the anchor 1 in the friable material in a way that is known, for example, from documents EP-0 165 674, EP-1 443225 and EP-0 943 822. The external diameter of the screw thread 8 is here more or less twice the diameter of the volume formed by the exterior surfaces of the struts 7a, 7b, 7c, 7d. It can be seen from the figures that, in this particular instance, the screw thread 8 bears both against the exterior surface and against the lateral surfaces of the struts 7a, 7b, 7c, 7d.

In this particular instance, the struts 7a, 7b, 7c, 7d run, in the direction of the bearing flange 4, along the interior surface of the ring 5 supporting the bearing flange 4. The struts 7a, 7b, 7c, 7d here have a thickness greater than that of the ring 5 supporting the bearing flange 4, their exterior surface running in the continuation of the exterior surface of the ring 5 and their interior surface running, a constant distance away from the axis 2 of the anchor 1, as far as the end orifice of the ring 5, at the bearing flange 4, by which a fastening is intended to be inserted.

In this instance it is the struts 7a, 7b, 7c, 7d which between them define the imprint that forms the means 4' of collaboration with a cross-head screwdriver.

Each strut 7a, 7b, 7c, 7d further comprises, on its internal surface, a respective rib 7'a, 7'b, 7'c, 7'd of more or less triangular cross section. These ribs 7'a, 7'b, 7'c, 7'd run more or less along the entire length of the struts 7a, 7b, 7c, 7d from their end in the ring 5 supporting the bearing flange 4. These ribs 7'a, 7'b, 7'c, 7'd form a support that becomes tapped by a screw introduced into the anchor 1 when the screw is screwed thereinto, if its diameter exceeds the diameter of the internal circular volume defined by the ribs 7'a, 7'b, 7'c, 7'd. The screw is thus suitably anchored in the anchor 1 because, by virtue of its screw thread, it forms a tapping which, once the screw has been introduced and is collaborating with its screw thread, acts as an anchor.

It may be noted that the internal surface of the struts 7a, 7b, 7c, 7d, excluding the ribs 7'a, 7'b, 7'c, 7'd is of concave shape, so as to follow the exterior shape of a fastening introduced into the anchor 1.

The ring 6 supporting the piercing end 3 supports two ribs 9, also of triangular cross section, that is to say of rectangular pyramidal shape. A triangular rib 9 is provided on each side of the plane formed by the blade of the piercing end 3. The ribs contribute to the piercing and boring function of this end 3, which is thus somewhat in the form of a drill bit.

Two struts 7a, 7c run more or less in the plane formed by the piercing blade 3, the other two struts 7b, 7d running at equal distances from the first two, that is to say the struts 7a, 7b, 7c, 7d are situated in positions 90° apart from one another about the axis 2 of the anchor 1. This positioning of the struts 7a, 7b, 7c, 7d with two struts 7a, 7c in the plane of the piercing blade 3 makes the manufacture of the anchor 1 far easier if this anchor is formed by moulding because the mould can be designed in such a way that the struts 7a, 7c fall in the parting line between the two mould halves.

It will finally be noted that the anchor screw thread 8 is separated from the flange 4 by an axial distance far shorter than one pitch length, somewhat forming a half flange parallel to the bearing flange 4. Such a design makes it possible, when anchoring into a friable material, for the more rigid sheet covering the friable material to be trapped between the bearing flange 4 and the half flange.

Having structurally described the anchor 1, the way in which it is fitted in a support made of friable material, in this instance a dry partition wall, will now be described.

The anchor 1 is inserted into the partition by "screwing" it in, in other words by turning it in the insertion direction 10 using a turning driving tool, in this instance a screwing tool comprising a cross-head screw head engaged in the imprint 4' of the support ring 5 supporting the bearing flange 4. As it is inserted into the friable material, the anchor 1 itself pierces its own accommodating hole in the material, using its piercing end 3. The anchor 1 is driven in this way until the bearing flange 4 comes to bear against the margin of the hole. In this instance, the sheet covering the friable material is then pinched between the bearing flange 4 and the half flange formed by the end of the screw thread 8. The screw thread 8 has tapped, in the hole bored by the piercing end 3, an imprint allowing it to anchor the anchor 1 in the friable material. A fastening such as a screw can then be inserted into the anchor 1, to attach something against the friable material. As it is screwed into the anchor 1 the screw taps the ribs 7'a, 7'b, 7'c, 7'd of the struts 7a, 7b, 7c, 7d and is firmly anchored in the anchor 1.

As the anchor 1 is turned, a torque is applied to the support ring 5 supporting the bearing flange by the screwing tool engaged with the imprint 4' formed on the internal surface of this ring 5. This torque is applied at right angles to the axis 2 of the anchor 1, without being secant therewith, that is to say tangentially to the volume defined overall by the exterior surfaces of the struts 7a, 7b, 7c, 7d. The struts 7a, 7b, 7c, 7d transmit this torque from the bearing flange 4 to the piercing end 3, thus transmitting the energy needed to turn the anchor 1 and for the piercing end 3 to pierce the friable material. The struts 7a, 7b, 7c, 7d have a cross section the long dimension of which is more or less parallel to the screwing torque applied, this torque being transmitted suitably from the bearing flange 4 to the piercing end 3.

In the embodiment presented, the torque is transmitted all the better since it is the ends of the struts 7a, 7b, 7c, 7d, continuing over the internal surface of the support ring 5 supporting the bearing flange 4, that form the imprint 4' for the driving tool. Thus, the driving tool bears against the ends of the struts 7a, 7b, 7c, 7d to turn the anchor 1 and, as a result, the torque is transmitted directly to the struts 7a, 7b, 7c, 7d.

The invention has been set out in relation to an anchor 1 comprising four straight struts 7a, 7b, 7c, 7d. It goes without saying that the anchor could comprise a greater number of struts or alternatively could comprise just two or three struts, sized accordingly.

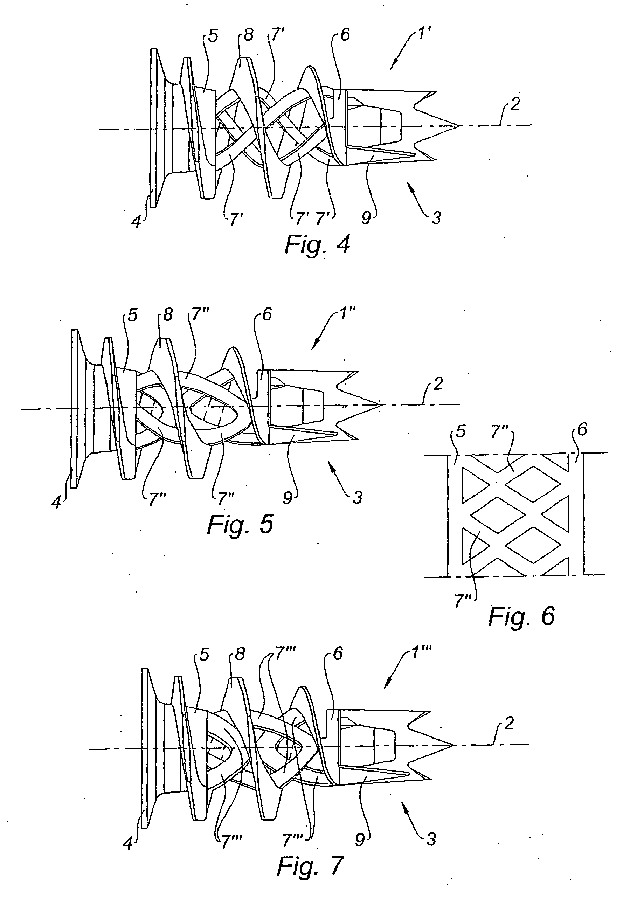

Some particular embodiments of the anchor of the invention are depicted with reference to Figures 4 to 7. The anchors depicted in Figures 4 to 7 are identical to the anchor of Figures 1 to 3 as far as all their constituent elements are concerned, except for the struts which are not straight. A straight strut is to be understood as meaning a strut like one of those in Figures 1 to 3, of straight shape.running from one ring to the other parallel to the axis of the anchor. Apart from the struts, the anchor elements are denoted by references identical to those used in Figures 1 to 3.

In Figure 4, the anchor 1' comprises a plurality of struts 7' forming a twisted assembly. Each strut 7' is in the form of a helix, directed in the opposite direction to the direction in which the anchor 1' is screwed in, and runs from the support ring 5 supporting the bearing flange 4 to the support ring 6 supporting the piercing end 3. The struts 7' are angularly offset from one another, preferably by equal distances, and in this instance here all have the same helical pitch. Certain struts 7' may possibly not be connected, at their end, to a ring 5, 6 but to the screw thread 8 near the said ring 5, 6 if doing so proves simpler from a manufacturing point of view.

According to an alternative embodiment, the helix that each strut 7' forms could be orientated in the direction in which the anchor 1' is screwed in.

In Figure 5, the anchor 1" comprises a plurality of struts 7" which run from the support ring 5 supporting the bearing flange 4 to the support ring 6 supporting the piercing end 3, in the form of a latticework. As can be seen in Figure 6 which depicts the rings 5, 6 and the struts 7" in a developed view, the struts 7" intersect one another in the manner of a latticework. Once formed to constitute the anchor 1", the struts 7" therefore run between the rings 5, 6 in the form of helixes, the helixes intersecting one another.

In Figure 7, the anchor 1"' comprises pairs of struts 7"' forming triangles between them, that is to say that each pair of struts 7"' forms a V. In Figure 7, each reference 7"' denotes the two struts of the same pair. Each pair of struts 7"' runs between a ring 5, 6 and the screw thread 8 or between two successive turns of the screw thread 8. Each pair of struts 7"' is orientated in the direction of the axis 2 of the anchor 1"', that is to say that the struts 7"' are arranged in such a way that the points of the Vs are orientated either towards the piercing end 3 or towards the bearing flange 4. The struts 7"' could be arranged in such a way that the Vs all point in the same direction. It will be noted that in this embodiment with pairs of struts in the shape of a V, the struts 7"' do not run in a single piece from the support ring 5 supporting the bearing flange 4 to the support ring 6 supporting the piercing end 3 but from turn to turn of the screw thread 8. The screwing torque is therefore transmitted by the struts 7"' via the screw thread 8 between the successive pairs of struts 7"'.

All the comments made in respect of the struts 7a, 7b, 7c, 7d of Figures 1 to 3 apply to the struts 7', 7", 7"' of Figures 4 to 7, particularly as regards the position of the struts 7' with respect to the screw thread 8 or the shape of their cross section. The struts 7', 7", 7"' can in particular be arranged in such a way that they continue over the internal surface of the support ring (5) supporting the bearing flange (4) and form the means (4') of collaboration with a tool for turning the anchor.

## Claims

1. Anchor for friable material, comprising a piercing end (3), at the other end, a bearing flange (4) with means (4') of collaboration with a tool for turning the anchor, and an anchoring screw thread (8), **characterized in that** it comprises, between the bearing flange (4) and the piercing end (3), a plurality of struts ((7a, 7b, 7c, 7d), 7', 7", 7"') for transmitting a turning torque, about which struts the screw thread (8) runs.

2. Anchor according to Claim 1, in which the struts ((7a, 7b, 7c, 7d), 7', 7", 7'") have a cross section the largest dimension of which is generally parallel to the screwing direction.

3. Anchor according to Claim 2, in which the struts ((7a, 7b, 7c, 7d), 7', 7", 7"') have a generally rectangular cross section, the largest dimension of the rectangle being parallel to the screwing direction.

4. Anchor according to one of Claims 1 to 3, in which the anchor comprises a support ring (5) supporting the bearing flange (4) and a support ring (6) supporting the piercing end (3), and the struts ((7a, 7b, 7c, 7d), 7', 7", 7'") run between the two rings (5, 6).

5. Anchor according to Claim 4, in which the struts (7a, 7b, 7c, 7d), 7', 7", 7'") extend along the internal surface of the support ring (5) supporting the bearing flange (4) and form the means (4') of collaboration with a tool for turning the anchor.

6. Anchor according to one of Claims 4 and 5, in which the struts ((7a, 7b, 7c, 7d), 7', 7") run in single pieces between the two rings (5, 6).

7. Anchor according to one of Claims 1 to 6 which comprises four equidistant straight struts (7a, 7b, 7c, 7d).

8. Anchor according to Claim 7 in which the piercing end (3) comprising a piercing blade (3) runs overall in a plane, the anchor comprises two struts (7a, 7c) in the plane of the blade (3) and two struts (7b, 7d) equidistant from them.

9. Anchor according to one of Claims 1 to 6 which comprises struts (7') in the form of helixes.

10. Anchor according to one of Claims 1 to 6 which comprises struts forming a latticework.

11. Anchor according to one of Claims 1 to 5 which comprises pairs of struts each pair in the form of a V, running between a support ring (5, 6) and the screw thread (8) or between two successive turns of the screw thread (8).

## Patentansprüche

1. Anker für sprödes Material, umfassend ein Schneideende (3), an dem anderen Ende einen Lagerflansch (4) mit einem Mittel (4') zur Zusammenwirkung mit einem Werkzeug zum Drehen des Ankers, und ein Verankerungsschraubgewinde (8), **dadurch gekennzeichnet, dass** er zwischen dem Lagerflansch (4) und dem Schneideende (3) mehrere Streben ((7a, 7b, 7c, 7d), 7', 7", 7"') zur Übertragung eines Drehmoments umfasst, wobei das Schraubgewinde (8) um die Streben verläuft.

2. Anker nach Anspruch 1, wobei die Streben ((7a, 7b, 7c, 7d), 7', 7", 7"') einen Querschnitt aufweisen, dessen größte Abmessung im Allgemeinen parallel zu der Schraubrichtung verläuft.

3. Anker nach Anspruch 2, wobei die Streben ((7a, 7b, 7c, 7d), 7', 7", 7"') einen im Allgemeinen rechteckigen Querschnitt aufweisen, wobei die größte Abmessung des Rechtecks parallel zu der Schraubrichtung verläuft.

4. Anker nach einem der Ansprüche 1 bis 3, wobei der Anker einen Stützring (5), der den Lagerflansch (4) stützt, und einen Stützring (6), der das Schneideende (3) stützt, umfasst, und die Streben ((7a, 7b, 7c, 7d), 7', 7", 7"') zwischen den beiden Ringen (5, 6) verlaufen.

5. Anker nach Anspruch 4, wobei sich die Streben ((7a, 7b, 7c, 7d), 7', 7", 7"') entlang der Innenfläche des Stützrings (5), der den Lagerflansch (4) stützt, erstrecken und das Mittel (4') zur Zusammenwirkung mit einem Werkzeug zum Drehen des Ankers bilden.

6. Anker nach einem der Ansprüche 4 und 5, wobei die Streben ((7a, 7b, 7c, 7d), 7', 7") zwischen den beiden Ringen (5, 6) als Einzelstücke verlaufen.

7. Anker nach einem der Ansprüche 1 bis 6, umfassend vier abstandsgleiche gerade Streben (7a, 7b, 7c, 7d).

8. Anker nach Anspruch 7, wobei das Schneideende (3), das eine Schneideklinge (3) umfasst, zur Gänze in einer Ebene verläuft, wobei der Anker zwei Streben (7a, 7c) in der Ebene der Klinge (3) und zwei davon abstandsgleiche Streben (7b, 7d) umfasst.

9. Anker nach einem der Ansprüche 1 bis 6, umfassend Streben (7') in der Form von Spiralen.

10. Anker nach einem der Ansprüche 1 bis 6, umfassend Streben, die ein Gitterwerk bilden.

11. Anker nach einem der Ansprüche 1 bis 5, umfassend Paare von Streben, wobei jedes Paar in der Form eines V zwischen einem Stützring (5, 6) und dem Schraubgewinde (8) oder zwei aufeinanderfolgenden Windungen des Schraubgewindes (8) verläuft.

## Revendications

1. Ancrage pour matériau friable, comprenant une extrémité de perçage (3) et, à l'autre extrémité, une collerette d'appui (4) dotée de moyens (4') de coopération avec un outil pour entraîner en rotation l'ancrage, et un filetage de vis d'ancrage (8), **caractérisé en ce qu'**il comprend, entre la collerette d'appui (4) et l'extrémité de perçage (3), une pluralité d'entretoises ((7a, 7b, 7c, 7d), 7', 7", 7"') pour transmettre un couple de rotation, autour desquelles entretoises s'étend le filetage de vis (8).

2. Ancrage selon la revendication 1, dans lequel les entretoises ((7a, 7b, 7c, 7d), 7', 7", 7"') ont une section transversale dont la plus grande dimension est généralement parallèle à la direction de vissage.

3. Ancrage selon la revendication 2, dans lequel les entretoises ((7a, 7b, 7c, 7d), 7', 7", 7"') ont une section transversale généralement rectangulaire, la plus grande dimension du rectangle étant parallèle à la direction de vissage.

4. Ancrage selon l'une des revendications 1 à 3, dans lequel l'ancrage comprend une bague de support (5) supportant la collerette d'appui (4) et une bague de support (6) supportant l'extrémité de perçage (3), et les entretoises ((7a, 7b, 7c, 7d), 7', 7", 7"') s'étendent entre les deux bagues (5, 6).

5. Ancrage selon la revendication 4, dans lequel les entretoises ((7a, 7b, 7c, 7d), 7', 7", 7"') s'étendent le long de la surface interne de la bague de support (5) supportant la collerette d'appui (4) et forment les moyens (4') de coopération avec un outil pour entraîner en rotation l'ancrage.

6. Ancrage selon l'une des revendications 4 et 5, dans lequel les entretoises ((7a, 7b, 7c, 7d), 7', 7", 7"') s'étendent d'une seule pièce entre les deux bagues (5, 6).

7. Ancrage selon l'une des revendications 1 à 6, qui comprend quatre entretoises (7a, 7b, 7c, 7d) rectilignes équidistantes.

8. Ancrage selon la revendication 7, dans lequel l'extrémité de perçage (3) comprenant une lame de perçage (3) s'étend globalement dans un plan, et dans lequel l'ancrage comprend deux entretoises (7a, 7c) dans le plan de la lame (3) et deux entretoises (7b, 7d) équidistantes de celles-ci.

9. Ancrage selon l'une des revendications 1 à 6, qui comprend des entretoises (7') en forme d'hélices.

10. Ancrage selon l'une des revendications 1 à 6, qui comprend des entretoises formant un treillis.

11. Ancrage selon l'une des revendications 1 à 5, qui comprend des paires d'entretoises, chaque paire étant en forme de V, s'étendant entre une bague de support (5, 6) et le filetage de vis (8) ou entre deux spires successives du filetage de vis (8).
